# EUROPEAN PATENT SPECIFICATION

(11) **EP 2 577 157 B1**
(45) Date of publication and mention of the grant of the patent: **04.07.2018**
(21) Application number: 11725974.7
(22) Date of filing: 20.05.2011
(51) Int. Cl.: F21V 33/00, H05B 37/02

(54) **AMBIENT LIGHT DEVICE**
UMGEBUNGSLICHTVORRICHTUNG
DISPOSITIF D'ÉCLAIRAGE D'AMBIANCE

(30) Priority: 04.06.2010 EP 10164947
(43) Date of publication of application: 10.04.2013
(73) Proprietor: TP Vision Holding B.V., 1097 JB Amsterdam (NL)
(72) Inventor: BRUYNEEL, Filip Marcel Denise, 1097 JB Amsterdam (NL); SEYNAEVE, Dirck, 1097 JB Amsterdam (NL); DELVA, Pieter Jan, 1097 JB Amsterdam (NL); DE MEY, Jens Albert Margriet, 1097 JB Amsterdam (NL)
(74) Representative: DREISS Patentanwälte PartG mbB
(86) International application number: PCT/IB2011/052216
(87) International publication number: WO 2011/151755

(56) References cited:
- WO-A1-2008/081387
- WO-A1-2010/041172
- WO-A1-2010/044043
- US-A1- 2007 253 182
- US-A1- 2009 040 785
- US-B1- 6 191 939

## Description

### FIELD OF THE INVENTION

The present invention pertains to the field of display devices, such as LED TVs, having ambient light capabilities. In particular, the present invention pertains to a back cover assembly comprising a back cover for a device having ambient light capabilities, wherein a part of the back cover is utilized as a reflector for the light emitted by ambient light sources.

### BACKGROUND OF THE INVENTION

Display systems for enhanced viewing experience when watching video shown on a display device, such as a TV, by using light sources for projecting ambient light are known in the art.

A particularly interesting application is to project the ambient light on a wall using ambient light sources surrounding the display device and/or projecting the ambient light towards a viewer.

Typically, a display device having ambient lighting functionality is a flat TV, which may hang on a surface, such as a wall, or placed in front of the surface. The display device may be provided with ambient light sources, such as Light Emitting Diodes, located adjacent to a display area or screen being capable of displaying diffuse light correlated to the images or video content presented on the display area. In use, the ambient light sources may emit ambient light towards a surface behind the display device and/or towards a viewer in front of the display device.

Due to cost the number of components in these ambient display devices needs to be reduced. Furthermore, it is required that the ambient light components require as little space as possible due to the increasing demand on flat TV screens.

Hence, an improved back cover assembly for an ambient display device would be advantageous.

WO 2010/044043 A1 discloses an ambience lighting system where a reflector itself is the back of the display device. Accordingly, the appropriate elements are selected for the back of the display device, or the back may be coated with an appropriate element to obtain the necessary reflecting property. The one or more light sources may be point like light sources such as LEDs.

WO 2008/081387 A1 discloses a display device having a display screen for displaying video images, and further comprising a lighting or illumination system with multiple light sources for creating respective multiple colors next to at least one side of the display screen. The lighting or illumination system further comprises a bezel with a reflector and a diffuser, wherein the reflector has a window section allowing the light from the light sources to be split into two in such a way that part, e.g. half or more, of the light is being directed to the background of the display device and another part, e.g. half or less of the light is being directed to the bezel diffuser, thus illuminating the front of the bezel.

US 2007/0253182 A1 discloses a device for illuminating a keyboard or other portion of a PC main body unit of a portable computer.

US 2009/0040785 A1 discloses a transparent resin plate including a plurality of slits formed intermittently and located along the border line between a housing frame portion and a light conductor plate portion, the slits includes either or both of respective first optical path converting portions and a second optical path converting portion, and flap portions of a reflector are inserted at least in the first optical path converting portions. Also, the second optical path converting portion of the plurality of slits is arranged to meet at least part of optical paths of hypothetical optical paths which are emitted forward from a light source in the forward direction, reach directly the housing frame portion and which do not cross the first optical path converting portion, cf. Abstract.

US 6,191,939 B1 discloses an information handling system capable of being utilized in an environment having a low level of ambient light is disclosed. The information handling system includes a housing having upper and lower sections, a display disposed on the upper section of the housing for displaying information, and a reflective material disposed on the upper section of the housing for reflecting light emanating from the display onto the lower section of the housing. The reflected light illuminates the lower section of the housing.

WO 2010/041172 A1 discloses a display device comprising an LED array working both as a backlight source for an LCD panel and as an ambient light source providing ambient light with properties dependent on the image content presented by the LCD panel.

### SUMMARY OF THE INVENTION

Accordingly, the present invention preferably seeks to mitigate, alleviate or eliminate one or more of the above-identified deficiencies in the art and disadvantages singly or in any combination and solves at least the above mentioned problems by providing a back cover assembly according to the appended patent claims.

An object of the invention is to utilize part of the back cover, i.e. housing, of the TV set as a reflector for the light emitted by ambient light sources e.g. provided on the backlight PCB of the TV set.

In an aspect a back cover assembly for a device having an ambient light source is provided. The back cover assembly comprises a back cover for protecting the device. The back cover comprises an opening for allowing light emitted from the ambient light source to propagate therethrough and a reflective surface for deflecting light emitted from the ambient light source.

An advantage of the back cover assembly is that no separate mechanical reflector is needed, which saves both components, and costs. Another advantage, when the device is a TV set, is that it allows for a less thick TV set. Yet another advantage with this is that the labor needed for mounting the reflector is reduced.

Other embodiments and advantages will be disclosed in the following.

### BRIEF DESCRIPTION OF THE DRAWINGS

These and other aspects, features and advantages of which the invention is capable of will be apparent and elucidated from the following description of embodiments of the present invention, reference being made to the accompanying drawings, in which
Fig. 1 illustrates a top view of a LED backlight PCB having integrated side emitting LEDs according to an embodiment;
Fig. 2 illustrates a side view of the LED backlight PCB of Fig. 1;
Fig. 3 illustrates a cross sectional side view of a part of the back cover assembly according to an embodiment;
Fig. 4 illustrates a cross sectional side view of a part of the back cover assembly according to an embodiment;
Fig. 5 illustrates a cross sectional side view of a part of the back cover assembly according to an embodiment;
Fig. 6 illustrates the back cover assembly according to an embodiment, seen from an angle;
Fig. 7 illustrates the back cover assembly according to an embodiment, seen from an angle;
Fig. 8 illustrates the back cover assembly according to an embodiment, seen from an angle; and
Fig. 9 illustrates a part of an ambient display device according to an embodiment, seen from behind.

### DESCRIPTION OF EMBODIMENTS

The following description focuses on embodiments applicable to an ambient display device wherein the ambient light sources, such as side emitting Light Emitting Diodes (LEDs), are integrated into a printed circuit board (PCB), such as the backlight PCB of the display device. The backlight PCB may e.g. be a LED backlight PCB. As is well known in the art, backlight PCBs are commonly used as the light source in TV-sets.

An idea of the present invention is to integrate or mount side emitting diodes into or onto the backlight PCB, to reduce the number of components and the required space for the ambient light functionality.

Side emitting LEDs, even though they have slightly poorer optical performance than top emitting LEDs, are well suited as ambient light sources, since they are compact and needs a smaller reflector than top emitting diodes. However, a problem which is overcome by the present invention is that, since the most logical position of the side emitting LEDs would be at the back of the LED backlight PCB, the side emitting LEDs do not emit light in the direction towards the wall behind the TV set, due to their side emitting construction.

A further idea is to integrate or mount top emitting LEDs into or onto the backlight PCB, since although they require more space, provides for a slightly better optical performance than the side emitting LEDs.

Hence, the present invention provides embodiments using both side emitting LEDs or top emitting LEDs.

In order to deflect the light towards the wall behind the TV set a reflector is needed. The common solution for the embodiments disclosed herein is to utilize a part of a back cover of the device having ambient light functionality as a reflector for deflecting the light emitted from the ambient light sources e.g. towards a wall behind the back cover. In this way no separate mechanical reflector is needed, which saves both components, and costs. Furthermore, this solution allows for a less thick TV set, as well as reduced labor for mounting the reflector.

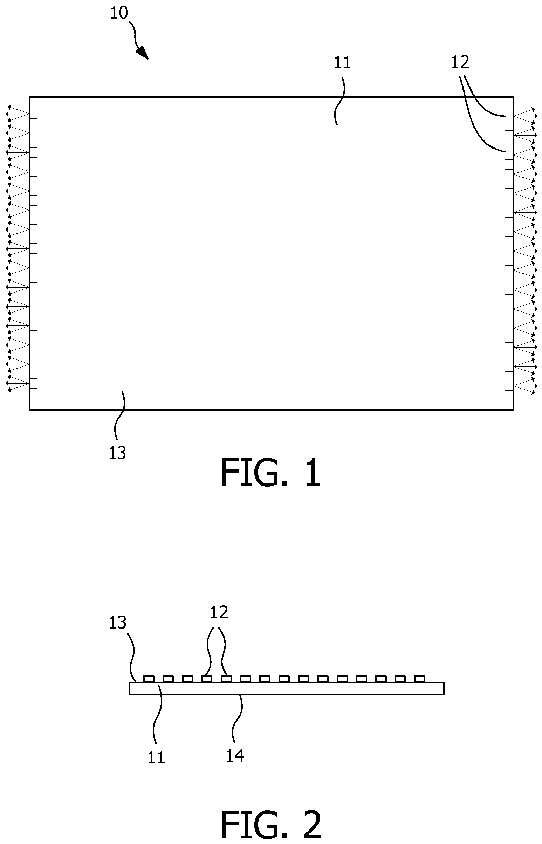

Fig. 1 illustrates a top view of a LED backlight PCB 11 for a TV set according to an embodiment. The LED backlight PCB is observed from the back side 13, i.e. the back side 13 of the backlight PCB 11 is in use facing the wall behind the TV set. The LED backlight PCB is provided with a number of side emitting LEDs 12 on its left and right side, for 2-channel or 2-sided ambient lighting. These side emitting LEDs 12 are mounted directly onto the backlight PCB 11, i.e. by soldering. The side emitting LEDs emit light as illustrated by the arrows in Fig. 1.

Fig. 2 illustrates a side view of the LED backlight PCB 11 of Fig. 1, wherein the back side 13 of the LED backlight PCB 11 is provided with side emitting LEDs, which in use faces the wall behind the TV set.

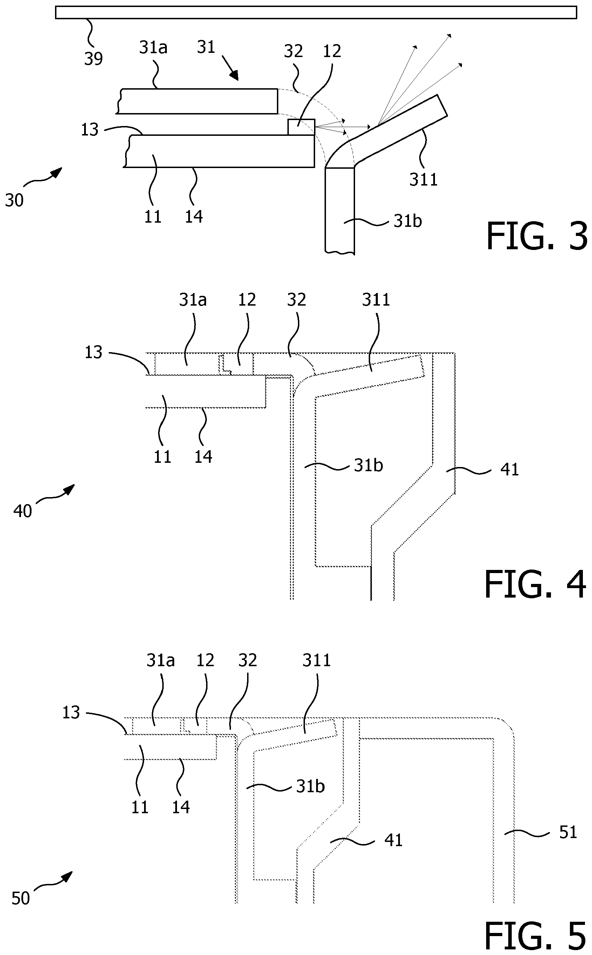

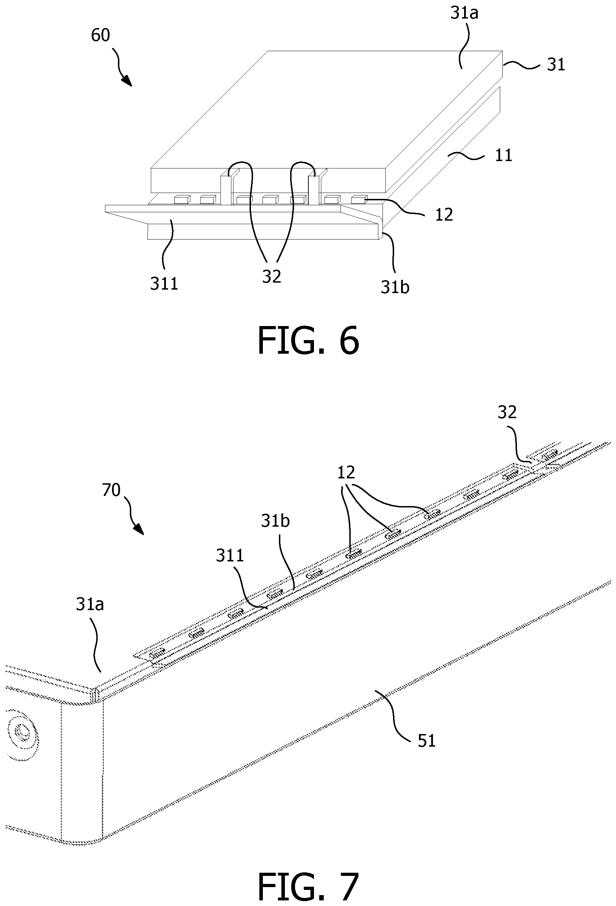

Fig. 3 illustrates a cross sectional view of a back cover assembly 30 according to an embodiment wherein the right edge of the LED backlight PCB 11 is assembled with a back cover 31. A part of the back cover 31 comprises a reflective section 311, such as a bent section, wherein the surface of the reflective section 311 of the back cover acts as a reflector. The reflector will deflect the ambient light emitted from the side emitting LEDs away from the reflector surface, as is indicated by the arrows in Fig. 3, e.g. towards a wall 39. The dashed structure in Fig. 3 indicates that the back side 31a of the back cover 31 and the side 31b of the back cover 31 are connected at least between two side emitting LEDs by means of a connecting bridge 32, as indicated in Figs 6 and 7. The function of the bridges is to provide for suitable mechanical strength to the back cover 31. Furthermore the bridges 32 provide for improved mechanical strength between the back side 31a and the side 31b of the back cover 31.

It should be appreciated that the side 31b and the back 31a of the back cover 31 can be one mechanical part, with openings for enabling ambient light to pass there through. Hence, no separate bridges 32 are required in such an embodiment.

It should further be appreciated that the reflective surface 311 may be arranged between the ambient light source 12 and the opening. Furthermore, the reflective surface 311 may be arranged so that the light emitted from the ambient light source 12 propagates through the opening before reaching the reflective surface 311. Thus, the light may pass through the opening both before or after it is deflected by the reflective surface 311.

It should also be understood that the back cover 31 preferably at least partly houses or covers the ambient light source 12, and that the light emitted from the ambient light source 12 propagates at least partly in an interior portion of the device under the back cover 31 before it is deflected by the reflective surface 311. The configuration in Fig. 3 should also allow for such an interpretation.

Fig. 4 illustrates a cross sectional view of a back assembly 40 according to an embodiment. The back assembly 40 comprises in addition to the back cover assembly of Fig. 3 a second side cover 41 for protecting the reflective surface 311. The second side cover is also shown in Fig. 5.

Fig. 5 illustrates a cross sectional view of a back assembly 50 according to an embodiment. The back assembly 50 comprises in addition to the back cover assembly of Fig. 4 a third side cover 51. The third side cover 51 may be attached to the second side cover 41, as is shown in Fig. 5 to allow for an alternative design. The third side cover 51 is also shown in Fig. 7. The third side cover 51 may be made of a material which provides protection, such as from mechanical forces, for the TV set, such as the back assembly 50.

In an embodiment, according to Fig. 6, a back cover assembly 60 is provided. Fig. 6 illustrates a part of the back cover assembly 60, wherein the LED backlight PCB 11, is seen from an angle, wherein the bridges 32 are provided between the side emitting LEDs 12, connecting the backside of the back cover 31a with the side 31b of the back cover.

Fig. 7 illustrates a part of a back cover assembly 70 according to an embodiment, similar to the construction of Fig. 4.

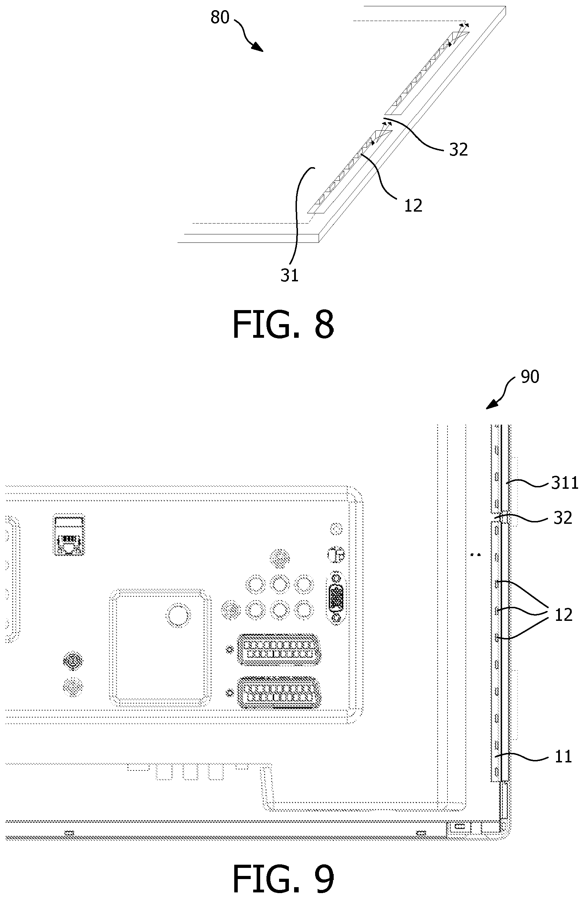

In another embodiment, according to Fig 8, a part of a back cover assembly 80 is provided. The back cover assembly 80 comprises a back cover 31, wherein the back 31a of the back cover 31 comprises cut out reflective flaps 311 forming the reflector for the ambient light sources 12 mounted on a LED backlight PCB 11. The formed flaps 311 deflects the ambient light emitted from the side emitting LEDs away from the back side 31a of the back cover as is indicated with the arrows in Fig. 8. The bridges 32 are in this embodiment a part of the back side 31a of the back cover 31. In similarity to the previous embodiments, a part of the back cover is bent to form a reflector surface for the ambient light, however in this embodiment the reflector surface 311 is made integral with the back side 31a of the back cover. This alternative still creates an acceptable halo performance of ambient light, in use. A further advantage is that the edge of the TV set might be made a little bit thinner. In some cases, when there is no possibility or desire of mounting the ambient light sources 12 close to the edge of the LED backlight PCB 11, but instead the ambient light sources 12 are mounted further away from the LED backlight PCB 11 edge, this embodiment is advantageous.

### Reflector surface

The reflective surface 311 or flap 311 forming a reflector surface may be processed to allow for high reflectance, thus effectively deflecting the ambient light emitted from the ambient light sources 12. Generally, the back cover of current TV-sets is black. Since black color does not provide for a high reflectance, the back cover may according to some embodiments be painted with a commonly known high reflectance paint.

The reflector surface 311 may also be 2k molded, or provided with a reflector tape (not shown).

In case the back cover is a metallic back cover, the metal itself could be used as a reflector, optionally after polishing, and hence no further processing may be needed.

It should be appreciated that the present invention is not limited to 2-sided ambient lighting. 3-sided ambient lighting, i.e. ambient side emitting LEDs on the left, right and upper side of the backlight PCB, or 4-sided ambient lighting, i.e. ambient side emitting LEDs on all sides of the backlight PCB are, is also included within the gist of the present invention.

In an embodiment, according to Fig. 9, part of an ambient display device 90 comprising the back cover assembly 30, 40, 50, 60, 70, 80 is provided, wherein the ambient light sources 12, the LED backlight PCB 11, connecting bridge 32 and the reflective surface 311 are visible. The ambient light sources 12 may be top emitting LEDs. The top emitting LEDs may be provided on the side surface of the LED backlight PCB 11. This is advantageous when side lit backlights are used in the TV set, since by putting the ambient light sources 12 on the side of the side lit backlight PCB 11 it is possible to reuse the backlight PCB for the ambient light.

The ambient light sources may be controlled by any commonly known means, such as by a control unit incorporated in the TV set, or optionally integrated in the LED backlight PCB 11. The controlling of the ambient light sources is not relevant for the present invention, since it may function independently of how the ambient light sources are controlled.

It should be appreciated that the PCB on which the ambient light sources are provided, need not be the backlight PCB of the display device, as has been described in the embodiments above. Optionally the ambient light sources may be provided on a PCB, different from the backlight PCB, such as an Aluminum (Al) PCB, which in use is mounted next to or on top of the backlight PCB of the display device. Even though the use of two separate PCBs, i.e. one backlight PCB and one PCB with ambient light sources provided thereon, increases the thickness or depth of the display device, at least from a manufacturing point of view it may be cheaper to produce a separate PCB having the ambient light sources provided thereon, than integrating the ambient light sources on the backlight PCB.

It should be appreciated that the back cover assembly according to some embodiments is not limited merely to TV set applications, but may be utilized in any back cover assembly, for any device, for which ambient light is desired. Hence the back cover assembly according to some embodiments could be utilized in e.g. a hifi system, on a receiver, telephone, etc. Although the present invention has been described above with reference to specific embodiments, it is not intended to be limited to the specific form set forth herein. Rather, the invention is limited only by the accompanying claims and, other embodiments than the specific above are equally possible within the scope of these appended claims.

## Claims

1. A TV set (90) having ambient light capability, the TV set (90) comprising a back cover assembly (30, 80) having a plurality of side emitting light emitting diodes, LEDs, (12) for emitting ambient light towards a surface behind the TV set (90), wherein said side emitting LEDs (12) emit light parallel to a back side (31a), the back cover assembly (30, 80) comprising: a back cover (31) for protecting the TV set (90), the back cover (31) comprising:
- a back side (31a) facing in use the surface behind the TV set (90) ;
- a reflective surface (311) for deflecting light emitted from said side emitting LEDs (12) towards the surface behind the TV set (90), and
a printed circuit board (11) parallel to the back side (31a), **characterized in**
- **that** the reflective surface (311) is inclined to the printed circuit board (11) onto which said side emitting LEDs (12) are mounted; and
- **that** the reflective surface (311) is formed by bending cut out reflective flaps of a part of the back side (31a).

2. The TV set (90) according to claim 1, wherein the back side (31a) of the back cover (31) and a side (31b) of the back cover (31) are connected by means of a connecting bridge (32), positioned between two adjacent ones of said side emitting LEDs (12) .

3. The TV set (90) according to claim 1, further comprising a side cover (41, 51) for protecting the reflective surface (311).

4. The TV set (90) according to claim 1, wherein the reflective surface is painted, 2k molded, or provided with a reflector tape, to allow for increased reflectance.

5. The TV set (90) according to claim 1 or 4, wherein the back cover (31) is made of metal, and the reflective surface or flaps (311) is polished to allow for increased reflectance.

6. The TV set (90) according to claim 1, wherein the back cover (31) comprises two, three, four, or more reflective surfaces (311) .

7. TV set (90) according to claim 1, wherein said side emitting LEDs (12) are positioned adjacent to the edge of the printed circuit board (11).

8. The TV set (90) according to claim 7, wherein the printed circuit board (11) is a backlight printed circuit board (11) for the TV set (90).

9. The TV set (90) according to one of the preceding claims, wherein the back cover (31) comprises an opening for allowing light emitted from said side emitting LEDs (12) to propagate therethrough.

## Patentansprüche

1. Fernsehgerät (90) mit Raumbeleuchtungsfähigkeiten, wobei das Fernsehgerät (90) eine hintere Abdeckungsanordnung (30, 80) mit mehreren seitlichen ausstrahlenden Leuchtdioden (LEDs; 12) zum Ausstrahlen von Raumbeleuchtung zu einer Oberfläche hinter dem Fernsehgerät (90) hin umfasst, wobei die seitlichen ausstrahlenden LEDs (12) Licht parallel zu einer Rückseite (31a) ausstrahlen, wobei die hintere Abdeckungsanordnung (30, 80) Folgendes umfasst: eine hintere Abdeckung (31) zum Schützen des Fernsehgeräts (90), wobei die hintere Abdeckung (31) Folgendes umfasst:
- eine Rückseite (31a), die in Verwendung der Oberfläche hinter dem Fernsehgerät (90) gegenüberliegt;
- eine reflektierende Oberfläche (311) zum Umlenken von Licht, das von den seitlichen ausstrahlenden LEDs (12) zu der Oberfläche hinter dem Fernsehgerät (90) hin ausgestrahlt wird, und
eine Platine (11) parallel zu der Rückseite (31a), gekennzeichnet darin
- dass die reflektierende Oberfläche (311) zu der Platine (11) geneigt ist, auf der die seitlichen ausstrahlenden LEDs (12) gelagert sind; und
- dass die reflektierende Oberfläche (311) durch Biegen von ausgeschnittenen reflektierenden Klappen eines Teils der Rückseite (31a) ausgebildet ist.

2. Fernsehgerät (90) nach Anspruch 1, wobei die Rückseite (31a) der hinteren Abdeckung (31) und eine Seite (31b) der hinteren Abdeckung (31) durch eine Verbindungsbrücke (32) verbunden sind, die zwischen zwei benachbarten der seitlichen ausstrahlenden LEDs (12) positioniert ist.

3. Fernsehgerät (90) nach Anspruch 1, ferner eine Seitenabdeckung (41, 51) zum Schützen der reflektierenden Oberfläche (311) umfassend.

4. Fernsehgerät (90) nach Anspruch 1, wobei die reflektierende Oberfläche gestrichen, 2k spritzgegossen oder mit einem Reflektorband ausgestattet ist, um vermehrte Reflexion zu ermöglichen.

5. Fernsehgerät (90) nach Anspruch 1 oder 4, wobei die hintere Abdeckung (31) aus Metall hergestellt ist und die reflektierende Oberfläche oder die Klappen (311) poliert ist/sind, um vermehrte Reflexion zu ermöglichen.

6. Fernsehgerät (90) nach Anspruch 1, wobei die hintere Abdeckung (31) zwei, drei, vier oder mehr reflektierende Oberflächen (311) umfasst.

7. Fernsehgerät (90) nach Anspruch 1, wobei die seitlichen ausstrahlenden LEDs (12) neben dem Rand der Platine (11) positioniert sind.

8. Fernsehgerät (90) nach Anspruch 7, wobei die Platine (11) eine Hintergrundbeleuchtungsplatine (11) für das Fernsehgerät (90) ist.

9. Fernsehgerät (90) nach einem der vorhergehenden Ansprüche, wobei die hintere Abdeckung (31) eine Öffnung umfasst, um von den seitlichen ausstrahlenden LEDs (12) ausgestrahltem Licht zu ermöglichen, sich dahindurch zu verbreiten.

## Revendications

1. Ensemble TV (90) susceptible d'assurer un éclairage d'ambiance, cet ensemble TV (90) comprenant un ensemble de couvercle arrière (30, 80) ayant une série de diodes électroluminescentes LED (12) à émission latérale permettant d'émettre de la lumière d'ambiance vers une surface située à l'arrière de l'ensemble TV (90), ces LED à émission latérale (12) émettant de la lumière parallèlement à un côté arrière (31a), l'ensemble de couvercle arrière (30, 80) comprenant: un couvercle arrière (31) permettant de protéger l'ensemble TV (90), le couvercle arrière (31) comprenant:
- un côté arrière (31a) tourné lors d'une utilisation vers la surface située à l'arrière de l'ensemble TV (90),
- une surface réfléchissante (311) permettant de dévier la lumière émise à partir des LED à émission latérale (12) vers la surface située à l'arrière de l'ensemble TV (90), et
- une carte de circuits imprimés (11) parallèle au côté arrière (31a),
**caractérisé en ce que**
- la surface réfléchissante (311) est inclinée vers la carte de circuits imprimés (11) sur laquelle sont montées les LED à émission latérale (12), et
- la surface réfléchissante (311) est formée en cintrant des rabats réfléchissants découpés d'une partie du côté arrière (31a).

2. Ensemble TV (90) conforme à la revendication 1, dans lequel le côté arrière (31a) du couvercle arrière (31) et un côté (31b) de ce couvercle arrière (31) sont reliés au moyen d'un pont de liaison (32) situé entre deux LED à émission latérale (12) adjacentes.

3. Ensemble TV (90) conforme à la revendication 1, comprenant en outre un couvercle latéral (41, 51) permettant de protéger la surface réfléchissante (311).

4. Ensemble TV (90) conforme à la revendication 1, dans lequel la surface réfléchissante est peinte, moulée en 2k ou équipée d'un ruban réflecteur pour permettre d'obtenir une réflectance augmentée.

5. Ensemble TV (90) conforme à la revendication 1 ou 4, dans lequel le couvercle arrière (31) est réalisé en métal et la surface réfléchissante ou les rabats (311) est (sont) polie(s) pour permettre d'augmenter la réflectance.

6. Ensemble TV (90) conforme à la revendication 1, dans lequel le couvercle arrière (31) comporte deux, trois, quatre ou un plus grand nombre de surfaces réfléchissantes (311).

7. Ensemble TV (90) conforme à la revendication 1, dans lequel les LED à émission latérale (12) sont adjacentes aux bords de la carte de circuits imprimés (11).

8. Ensemble TV (90) conforme à la revendication 7, dans lequel la carte de circuits imprimés (11) est une carte de circuits imprimés à rétro éclairage (11) pour l'ensemble TV (90).

9. Ensemble TV (90) conforme à l'une des revendications précédentes, dans laquelle le couvercle arrière (31) comporte une ouverture permettant à la lumière émise à partir des LED à émission latérale (12) de se propager au travers de celle-ci.
